Europäisches Patentamt

European Patent Office

Office européen des brevets

(11) Veröffentlichungsnummer: **0 508 143 A2**

# EUROPÄISCHE PATENTANMELDUNG

(21) Anmeldenummer: **92104249.5**

(51) Int. Cl.⁵: **G01F 23/26**

(22) Anmeldetag: **12.03.92**

(30) Priorität: **08.04.91 DE 4111271**

(43) Veröffentlichungstag der Anmeldung:
**14.10.92 Patentblatt 92/42**

(84) Benannte Vertragsstaaten:
**DE FR GB IT NL**

(71) Anmelder: **Koch, Berthold**
**Pützstrasse 4**
**W-4040 Neuss 1(DE)**

(72) Erfinder: **Koch, Berthold**
**Pützstrasse 4**
**W-4040 Neuss 1(DE)**
Erfinder: **Wärzelberger, Rainer**
**Im Taubental 7**
**W-4040 Neuss 1(DE)**

(74) Vertreter: **Türk, Gille, Hrabal, Leifert**
**Brucknerstrasse 20**
**W-4000 Düsseldorf 13(DE)**

(54) **Füllstands-Messvorrichtung.**

(57) Es ist eine Vorrichtung zum Messen des Füllstandes von Behältnissen, insbesondere von Behältnissen, in welchen fließfähige Feststoffe oder Flüssigkeiten mit unterschiedlichen Dielektrizitätskonstanten, beispielsweise Wasser und Öl, gesammelt werden, offenbart, die einen auf der Außenseite des Behältnisses elektrisch isoliert anzuordnenden Sensor, der Teil eines elektrischen Kondensators bildet, und eine im Behältnis gegenüber dem Sensor, im Abstand von diesem angeordnete elektrisch leitende Gegen-Platte, welche ebenfalls Teil eines elektrischen Kondensators bildet, aufweist.

Fig. 1

EP 0 508 143 A2

Die Erfindung betrifft eine Vorrichtung zum Messen des Füllstandes von von Behältnissen, insbesondere von Behältnissen, in welchen fließfähige Feststoffe oder Flüssigkeiten mit unterschiedlichen Dielektrizitätskonstanten, beispielsweise Wasser und Öl, gesammelt werden.

Die Füllstandsmessung in offenen oder geschlossenen Behältnissen, in denen sich Öl, Wasser und/oder Emulsionen daraus befinden, bereitet mit bekannten elektronischen Sensoren häufig Schwierigkeiten. Erfolgt die Messung bzw. Auswertung eines Meßsignals im Vergleich zum Medium Luft, so können sich Beläge und Verkrustungen an den Sensoren bilden, die durch in den Behältnissen befindliche verschmutzte oder zähflüssige Medien verursacht werden und eine zuverlässige Messung verhindern.

Es wurde gefunden, daß diese Probleme der Meßungenauigkeiten durch kapazitive Messung vermieden werden können, da sich leitende und nicht leitende Medien durch deren Dielektrizitätskonstante deutlich voneinander unterscheiden und somit auch bei Verschmutzung von Oberflächen keine Meßfehler auftreten können.

Kapazitiv arbeitende elektrische Sensoren bilden an ihrem aktiven Meßkopf zwischen Masse- und Meßelektrode ein elektrisches Feld aus, das sich frei in dem Raum ausbreitet und durch ein in den Bereich des Sensors gelangendes Medium verändert wird. Diese Veränderungen des elektrischen Feldes führen zu einer Veränderung der Kapazität, die einen Oszillatorschaltkreis anschwingen läßt oder dessen Frequenz verändert.

Der Erfindung liegt die Aufgabe zugrunde, einen für die Füllstandsmessung in offenen oder geschlossenen Behältnissen geeigneten Sensor zu schaffen, der Niveaustände von fließfähigen Feststoffen oder Flüssigkeiten, die Öl und Wasser enthalten können, problemlos und exakt feststellen kann.

Diese Aufgabe wird mit einer Vorrichtung der eingangs genannten Gattung gelöst, welche die Merkmale des kennzeichnenden Teiles des Patentanspruches 1 aufweist. Vorteilhafte Ausgestaltungen der Erfindung sind Gegenstand der Unteransprüche.

Bei der erfindungsgemäßen Meßvorrichtung bildet das zu messende bzw. festgestellte Medium das Dielektrikum eines Meßkondensators, dessen Kapazität neben der Dielektrizitätskonstante des Mediums von der Größe der aktiven Elektrodenflächen und deren Abstand zueinander abhängig ist.

Der kapazitive Sensor weist eine sozusagen schwebende Masseelektrode auf. Da der messende Teil des Sensors auf der Außenseite eines Behälters angeordnet werden kann, kommt dieser nicht mit den zu untersuchenden Medium in Kontakt.

Durch Ablagerungen des zu untersuchenden Mediums entstehende Beläge an den aktiven Elektrodenflächen können diese erst kurzschließen, wenn sich das zu messende Medium dazwischen befindet, wodurch eine sichere Feststellung des Füllstandes in einem Behälter möglich ist. Befinden sich im Behälter isolierende Medien, so tritt das vorstehend geschilderte Problem nicht auf. Vielmehr erfolgt eine rein kapazitive Messung.

In der Zeichnung sind zwei Ausführungsbeispiele einer erfindungsgemäßen Vorrichtung zum Messen des Füllstandes von Behältnissen schematisch dargestellt, und zwar zeigt

Fig. 1   eine teilweise senkrecht geschnittene erste Ausführungsform der Vorrichtung, die an einem Flüssigkeitsbehältnis angebracht ist,

Fig.2   eine teilweise geschnittene Ansicht einer zweiten Ausführungsform der Vorrichtung, ebenfalls an einem Flüssigkeitsbehältnis angebracht, und

Fig.3   eine Stirnansicht des im Flüssigkeitsbehältnis befindlichen Teiles der Vorrichtung aus Fig. 2.

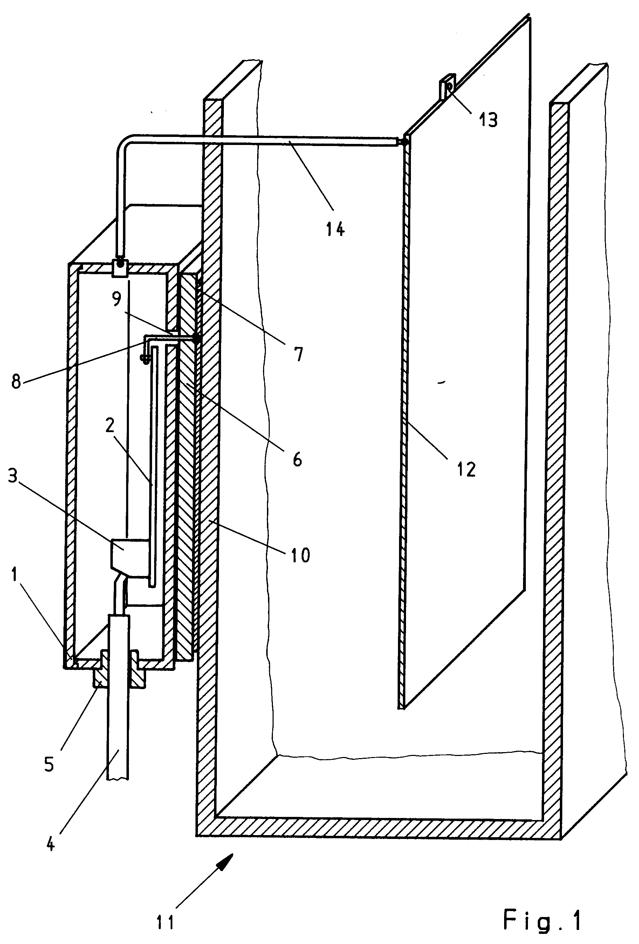

Die in Fig. 1 dargestellte Vorrichtung hat ein ganz oder teilweise aus leitfähigem Material, beispielsweise Metall, bestehendes Gehäuse 1, in dem eine Meßschaltung 2 angeordnet ist. Diese Meßschaltung 2 steht über ein Anschlußstück 3 und ein Kabel 4 mit einer nicht dargestellten elektrischen Beschaltung in Verbindung.

Das Kabel 4 ist durch eine Kabeldurchführung 5 aus dem kastenförmig geschlossenen Gehäuse 1 herausgeführt.

An einer Seite des Gehäuses 1 ist auf dessen Außenseite eine Isolierplatte 6 angebracht, auf deren Außenseite eine Elektrodenplatte 7, welche eine Meßelektrode bildet, befestigt ist. Diese Elektrodenplatte 7 steht über eine Leitung 8, welche durch eine Öffnung 9 des Gehäuses 1 geführt ist, mit der Meßschaltung 2 in Verbindung.

Das Gehäuse 1 liegt auf Massepotential. Das aus dem Gehäuse 1, der Isolierplatte 6 und der Elektrodenplatte 7 gebildete System definiert einen Kondensator, wobei die Elektrodenplatte 7 von äußeren Feldbeeinflussungen weitestgehend abgeschirmt ist. Die Meßschaltung 2 steht dabei mit dem Gehäuse 1 nicht in leitender Verbindung, ebensowenig wie die Leitung 8 eine elektrische Verbindung zwischen der Elektrodenplatte 7 und dem Gehäuse 1 herstellt.

Der so gebildete Kondensator ist auf der Außenseite einer Seitenwand 10 eines aus elektrisch isolierendem Material bestehenden Behälters 11 angebracht. Innerhalb des Behälters 11 ist gegenüber der Elektrodenplatte 7 eine weitere Elektrodenplatte 12 angeordnet, die mittels eines Auges 13 in nicht näher dargestellter Weise aufgehängt ist, beispielsweise an dem nicht dargestellten Dekkel des Behälters 11. Diese Elektrodenplatte 12 bildet eine sozusagen schwebend aufgehängte Masseelektrode, die über eine elektrische Leitung 14 mit dem Gehäuse 1 elektrisch leitend verbunden ist. Diese Leitung 14 ist in Fig. 1 durch die Seitenwand 10 des Behälters 11 hindurchgeführt, sie kann jedoch ebenso über den oberen Rand bzw. die Oberkante der Seitenwand 10 von innen nach außern verlaufen.

Diese Anordung gewährleistet vor allem bei im Behälter 11 befindlichen isolierenden Medien mit kleiner Dielektrizitätskonstante einen definierten Meßbereich. Bei Bildung von Belägen oder Verkrustungen durch leitende Medien wird wirksam verhindert, daß die beiden Elektrodenplatten 7 und 12 kurzgeschlossen werden können.

Die aus der Meßelektrode, der Behälterwand, dem im Behälter befindlichen Medium und der Masseelektrode gebildeten Anordnung ist ein Meßkondensator mit beschichtetem Dielektrikum, wobei ein aus der Meßelektrode und der Behälterwand gebildeter sogenannter interner Kondensator und ein aus der Behälterwand, dem im Behälter befindlichen Medium und der Masseelektrode bebildeter sogenannte Meßkondensator in Reihe liegen. Der interne Kondensator ist neben den geometrischen Verhältnissen von der Dielektrizitätszahl des isolierenden Materials des Behälters abhängig, während der Meßkondensator durch die Dielektrizitätszahl des im Behälter befindlichen Mediums bestimmt ist.

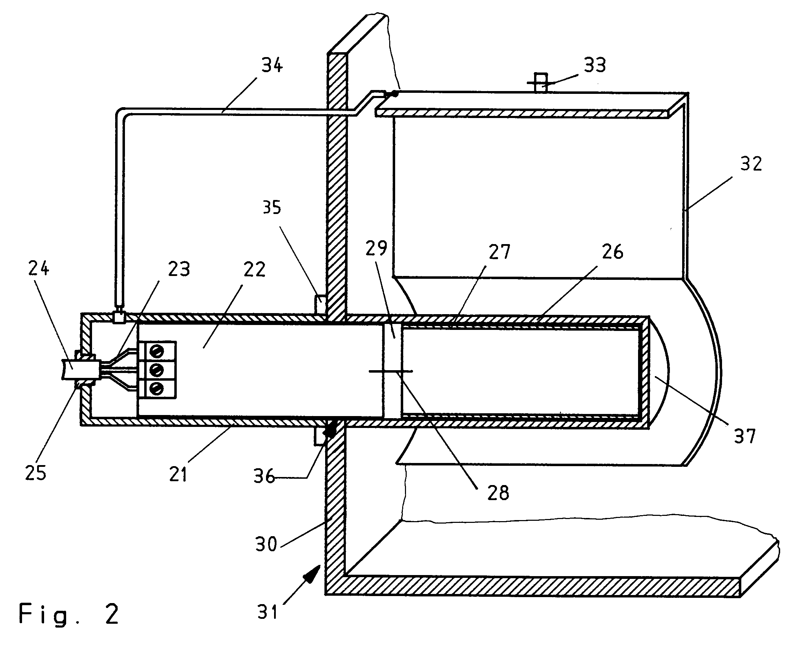

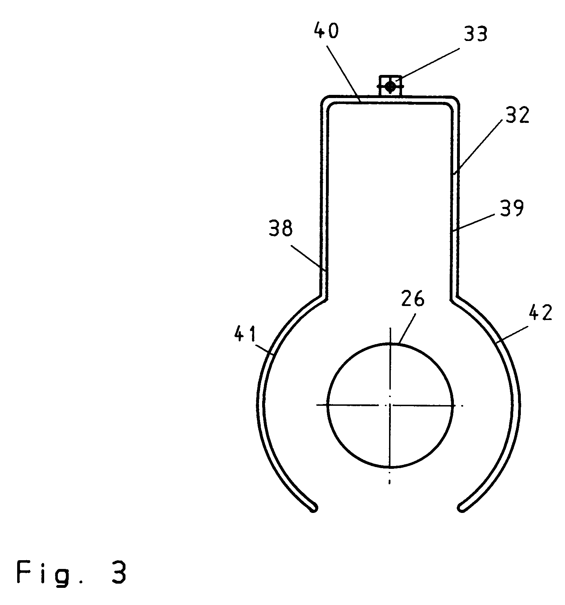

Während der in Fig. 1 dargestellte Meßkondensator sozusagen ein Flachsensor ist, zeigen Fig. 2 und 3 einen sozusagen dreidimensionalen oder rundlich augebildeten Kondensator oder Sensor, der jedoch im wesentlichen ebenso arbeitet wie die Meßvorrichtung gemäß Fig. 1.

Die in Fig. 2 und 3 dargestellte Vorrichtung weist ein rohrförmiges Gehäuse 21 auf, das mittels eines Flansches 35 an der Außenseite einer Seitenwand 30 eines Behälters 31 befestigt ist. In dem aus Aluminium bestehenden rohrfömigen Gehäuse 21 befindet sich eine Meßschaltung 22, die durch eine Öffnung 36 in der Seitenwand 30 in das Innere des Behälters 31 ragt. Das Gehäuse 21 bildet dabei, ebenso wie das Gehäuse 1 bei der Ausführungsform gemäß Fig. 1, eine Abschirmung für die Meßschaltung.

Die Meßschaltung 22 ist mit einem elektrischen Anschluß 23 versehen, der über ein Kabel 24 mit einer nicht dargestellten elektrischen Beschaltung verbunden ist. Dieses Kabel 24 ist durch eine Kabeldurchführung 25 aus dem Gehäuse 21 nach außen geführt.

Innerhalb des Behälters 31 ist in Flucht mit den rohrförmigen Gehäuse 21 ein isolierendes Rohr 26 angeordnet, das im Querschnitt dem Gehäuse 21 entspricht und dessen im Behälter 31 liegendes Ende 37 geschlossen ist. Die Meßschaltung 22 ragt in dieses isolierende Rohr 26 hinein, wie Fig.2 zeigt.

Innerhalb des isolierenden Rohres 26 befindet sich eine rohrförmige Elektrode 27, die im Abstand 29 von der Meßschaltung 22 beginnt und mit dieser über eine Leitung 28 elektrisch verbunden ist.

Im Behälter 31 ist eine in Stirnansicht betrachtet im wesentlichen U-förmige oder sattelartige Elektrode 32 angeordnet, die mittels eines Auges 33 in nicht näher dargestellter Weise im Behälter 31 aufgehängt ist. Diese Elektrode 32 besteht aus elektrisch leitendem Material und ist über eine elektrische Leitung 34 mit dem aus Aluminium bestehenden Gehäuse 21 leitend verbunden. Sie hat im oberen Bereich parallele Schenkel 38 und 39, die einstückig über eine Traverse 40 miteinander verbunden sind.

Am unteren Ende weisen die Seiten Schenkel 38 und 39 nach außen gewölbte Abschnitte 41 bzw. 42 auf, welche das Rohr 26 derart umhüllen, daß die als Masseelektrode dienende U-förmige Elektrode 32 die als Meßelektrode dienende rohrfömrige Elektrode 27 in gleichförmigem Abstand umhüllt.

Der in Fig. 2 und 3 dargestellte Meßkondensator arbeitet trotz unterschiedlicher geometrischer Konfiguration im wesentlichen ebenso wie der in Fig. 1 gezeigte Flachsensor, um den Füllstand einer im Behälter 31 befindlichen Flüssigkeit zu ermitteln.

Obwohl in der Zeichnung jeweils nur eine kapazitiv arbeitende Meßvorrichtung gezeigt ist, können an einem Behälter mehrere Vorrichtungen diese Art angeordnet sein, um obere und untere Füllstände zu ermitteln und entsprechend diesen Füllständen Ablaßeinrichtungen für die im Behälter befindlichen Flüssigkeiten zu steuern.

**Patentansprüche**

1.  Vorrichtung zum Messen des Füllstandes von Behältnissen, insbesondere von Behältnissen,in welchen fließfähige Feststoffe oder Flüssigkeiten mit unterschiedlichen Dielektrizitätskonstanten, beispielsweise Wasser und Öl, gesammelt werden, **dadurch gekennzeichnet**, daß sie einen auf der Außenseite des Behältnisses (11;31) elektrisch isoliert anzuordnenden Sensor (7;27), der Teil eines elektrischen Kondensators bildet, und eine im Behältnis gegenüber dem Sensor, im Abstand von diesem angeordnete elektrisch leitende Gegen-Platte (12;32), welche ebenfalls Teil eines elektrischen Kondensators bildet, aufweist.

2.  Vorrichtung nach Anspruch 1, dadurch gekennzeichnet, daß der Sensor ein wenigstens teilweise elektrisch leitendes Gehäuse (1;21) und eine gegenüber dem Gehäuse elektrisch isolierte elektrisch leitende Kondensatorplatte (7;27) aufweist.

3. Vorrichtung nach Anspruch 1 oder 2, dadurch gekennzeichnet, daß der Sensor eine mit der Meß-Kondensatorplatte (7;27) elektrisch verbundene elektrische oder elektronische Meßschaltung (2;22) enthält.

4. Vorrichtung nach einem der Ansprüche 1 bis 3, dadurch gekennzeichnet, daß das Gehäuse (1;21) des Sensors (7;27) und die Gegen-Platte (12;32) elektrisch leitend miteinander verbunden sind.

5. Vorrichtung nach einem der Ansprüche 1 bis 4, dadurch gekennzeichnet, daß der Sensor (7;27) elektrisch isoliert am Behältnis (11;31) angeordnet ist.

Fig.1

Fig. 2

Fig. 3